# EUROPEAN PATENT APPLICATION

(11) **EP 0 904 679 A1**
(43) Date of publication of application: **31.03.1999**
(21) Application number: 97116697.0
(22) Date of filing: 25.09.1997
(51) Int. Cl.: A01B 51/02

(54) **Self-moving vehicle for agricultural and industrial uses**

(71) Applicant: Silvestrin, Osvaldo, 35026 Conselve, PD (IT)
(72) Inventor: Silvestrin, Osvaldo, 35026 Conselve, PD (IT)

(57) **Abstract**

Bidirection selfmover with a great adhesion and variable wheelbase suitable to working processes also on steep grounds and lands and suitable to the formation of more appliances put in a order sequence.

## Description

A self-moving for agricultural and industrial uses.

From an animal towing that increased the number of the trainers which trained whith the increase of the load we have arrived to modern tractors that must increase its adhesion with the increase of the power required by the load.
We have obtained some improvements with the sistem of rising called "3points".
In most of cases the rising of the power required by the appliance is owned to the rising of the working surface by the appliance itself and this increases both its burden and its weight.
In order to train a bigger load , the power and the adhesion must be bigger. So also the weight and the burden of the trainer will be bigger.
The increase of the load and the trainer will increase both the margin for manoeuring and the compactness of the ground where you go or where you make the operations with appliance. If you use more appliances in sequence on the same tractor the exageration of the weight and the burden would be much more evident.

The invention of which is requested protection , is a self--moving appliance-bearer. The appliances are placed in the middle of the self-moving bearer , contained in the wheelbase and its weight is the weight of the self-moving bearer itself because there is not that typical moment on the wheels of an applianced carried on a common ruberized tractor.
The operations usually made on land tend to lift the ground and to make it softer. Lifting the ground we have a particular reaction , that is to say that there is a force downwards which is proportional to the weight of the lifted ground.
As concerns the burden , this kind of appliances is decisive as varying the wheelbase the burden will be the bare minimun.

This arrangement of the "3points" connections , on the ends and on the centre of the bearer , makes the mechanical bearer itself suitable to work with more appliance together (combinated) and with the types which are used nowadays. The turn of the steering wheel can take place on one shaft or at the same time on both the shafts.
The room for manoeuvring will be very limited with the turn of the steering wheel on both the shafts. Building description of a mechanic bearer with 3 wheels having variable wheelbase and mobile structure.

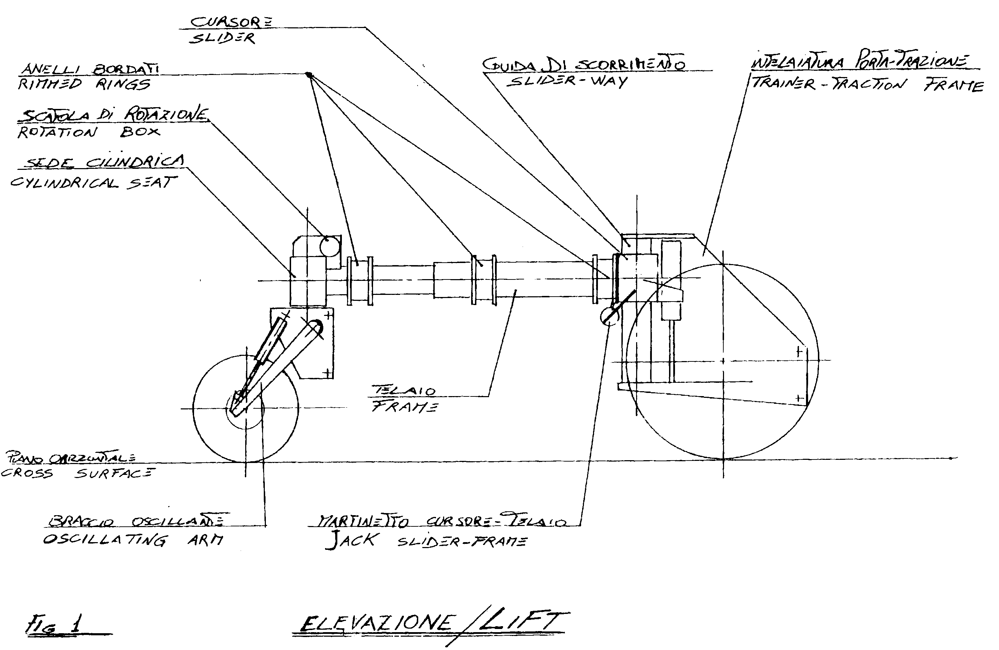

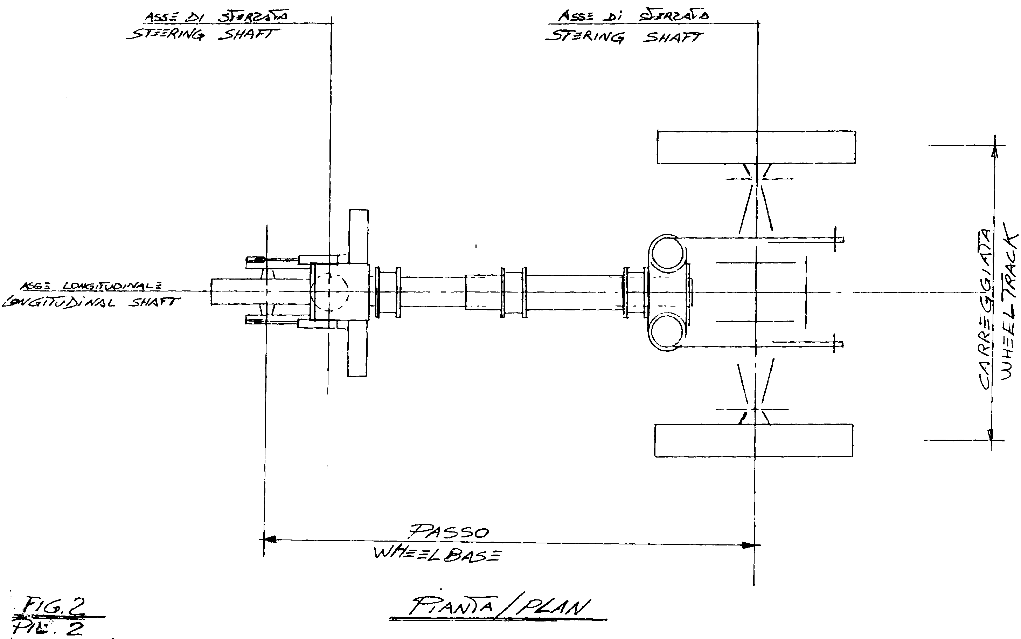

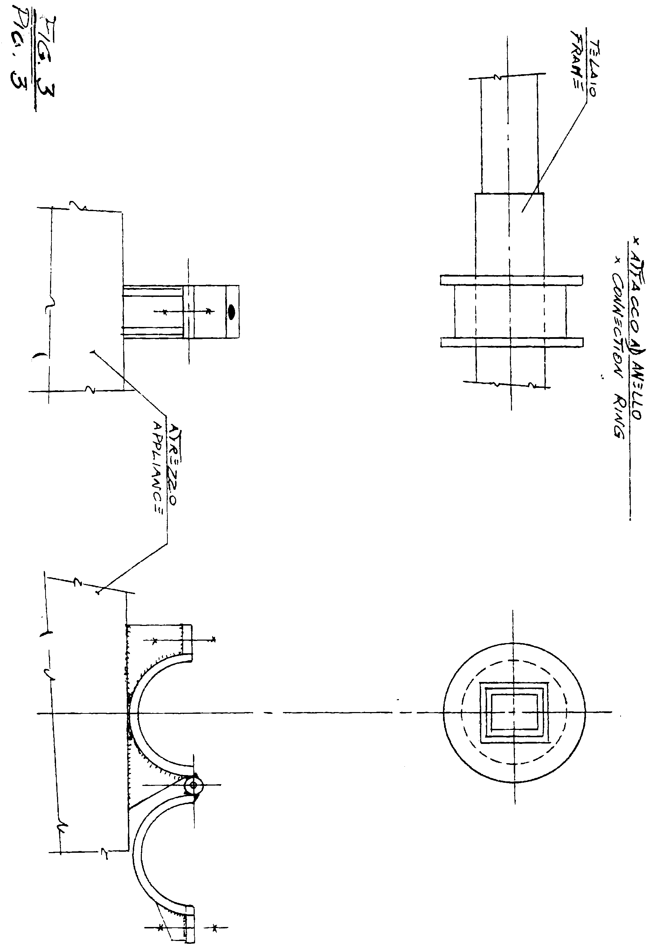

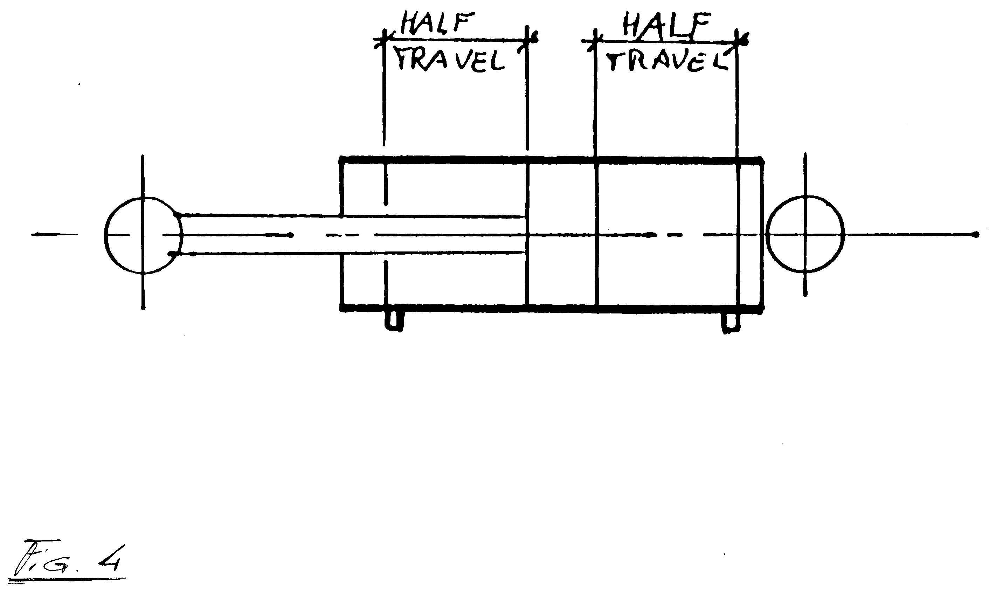

### Main parts: (see Fig. 4)

- Frame
- Oscillating/steering single wheel
- Motor/steering part
- Connections

### Glossary:

condition of half travel
refered to a jack

### Frame:

Two pipes can slide without rolling one into the other thank to the action of a jack. The two pipes must be and must stay allined. At one end a slider can rotate. The rotation shaft of the slider and the longitudinal shaft of the pipes coincide. The slider can rotate without rolling on the support which is fixed whith the pipe. The rotation of the slider is rulled by a jack. The slider has the suitable form to the traslation on a slide-way.
On the opposite part of the slide , on the other pipe , a cylindrical seat is fixed. The cylindrical seat is trued with regard to the longitudinal shaft of the pipes. With the jack, that rules the rotation of the slider in condition of half--travel , the translation shaft of the slider and the longitudinal shaft of the cylindrical seat must stay on the same surface. In the bearer pictured in I-2 this surface is vertical. The longitudinal shaft of the cylindrical seat is a steering shaft (PICTURES I-2).

### Oscillating/steering single wheel:

One wheel is centred (fixed) on a support. The support is centred ( fixed) on a supporting arm or on a fork. The supporting arm or the fork at the opposite end to the support-wheel is pivoted on. The pivot on which the supporting arm or fork oscillate, is parallel to the rotation shaft of the wheel and this pivot is fixed with plates to the inferior end of another pivot which is orthogonal to the rotation shaft of the wheel and it is centred with respect to the wheel. This pivot is consequently vertical. The jack/jacks is/are istalled on the plates of union between the two pivots. The jacks are linked to the other end with the arm or fork and they adjust the oscillation of them.
The vertical pivot can rotate on the cylindrical seat placed on the frame.
The rotation of the pivot on the cylindrical seat can be provoked either by the jack/s or by a rotation box or by what is offered by the status of the tecnique.
If it is necessary , this wheel can be provided of traction and brake. (PICTURES I-2)

### Motor/steering part:

A steering and braking traction is installed on a frame which has suitable form and dimension. The traction can be mechanic , hidrostatic or what is offered by the status of the tecnique. A slide-way , centred with respect to the wheel-track is centred to the frame. The slider which has been menzioned in the part concerning the frame , must translate in the slide-way.
The slide-way must assure a vertical movement of the slider which must be bigger or the same of the vertical movements of the frame , which is caused by the oscillation of the arm on which the single wheel is istalled. The ends of the slide-way are connected to the motor/steering part.
One or more jacks assure the sliding of the slider on the slide-way.
As the traction must be on both directions and must have the same features , the guide position or the cab must be two-faced. (PICTURES I-2)

### Connections:

The mechanical bearer , pictured in these pages , carries applicances. On the frame there are some rings which have the function of carrying the appliance/s. These rings can be disposed in the most suitable way to obtain a good function and a section that assures solidity. As the rings have a cylindrical section , they permit also the rotation on the frame. The rotation shaft is the longitudinal shaft of the pipes that form the frame. A jack , which is connected either by the frame or by motor/steering part wheel to the appliance , executes the rotation.
This system , moreover , assure an easy form of connection. Keeping the frame in the position of top hight , you put the bearer till that the rings touch the open seats which are suitable with the appliance that must be used. After that , you can close the seat either with hooks or with bolts.

## Claims

1. The selfmover is characterized by the fact that the appliance is hanged up near the barycentre of the selfmoving itself. This condiction increases the adhesion of the selfmover and reduces the burdens. The appliance is placed between the weelbase.

2. The selfmover is characterized by the fact that its wheelbase is variable to have always the bare minimun obstacle for the appliance with which one worrks. The wheelbase of the bearer can be varied by the action of the jack that holds the two pipes which form the frame and also rotating the position of the single wheel of I80° (I80 degress) by a mechanism or by hand. The removing between the wheelcentre and the longitudinal shaft of the cylindrical seat correspond to the half of the variation of the wheelbase which can be obtained with a rotation of I80° of the pivot that is placed in the cylindrical seat.

3. The selfmover is charaterized by the fact that it has a quick hooking/onhooking system for appliances. Rimmed rings on the pipes , forming the frame , go to meet rings connected each other with hinge and closing bolt and hook. The two half rings are placed on the appliances with half ring fixed to the appliance and the other half ring which is able to open itself rolling on the hinge , which is fixed to the half ring suitable to the frame . Going over the appliance with the bearer and centring the rimmed rings to the half rings fixed to the applience with the other half rings which are opened on the hinge , you slow down the bearer till the rimmed ring/s meet the half rings which are fixed to the appliance . After that you close the half ring/s making them rolling on the hinge and you close the bolts or the hooks.
